# EUROPÄISCHE PATENTSCHRIFT

(11) **EP 1 062 128 B1**
(45) Veröffentlichungstag und Bekanntmachung des Hinweises auf die Patenterteilung: **26.06.2002**
(21) Anmeldenummer: 99915620.1
(22) Anmeldetag: 12.03.1999
(51) Int. Cl.: B60R 21/20, B60K 37/00

(54) **INSTRUMENTENTAFEL FÜR EIN KRAFTFAHRZEUG**
INSTRUMENT PANEL FOR A MOTOR VEHICLE
TABLEAU DE BORD POUR VEHICULE A MOTEUR

(30) Priorität: 16.03.1998 DE 29805295 U
(43) Veröffentlichungstag der Anmeldung: 27.12.2000
(73) Patentinhaber: SAI Automotive SAL GmbH, 76732 Wörth am Rhein (DE)
(72) Erfinder: WARNECKE, Frank, D-76135 Karlsruhe (DE); GRÜBLER, Günther, D-65451 Kelsterbach (DE); KUNKEL, Thomas, D-67067 Ludwigshafen (DE); FLICK, Andreas, D-76870 Kandel (DE)
(74) Vertreter: Pfenning, Meinig & Partner GbR
(86) Internationale Anmeldenummer: EP9901709
(87) Internationale Veröffentlichungsnummer: WO9947386

(56) Entgegenhaltungen:
- EP-A- 0 748 722
- WO-A-97/03866
- US-A- 5 375 876
- US-A- 5 685 930

## Beschreibung

Die Erfindung betrifft eine Instrumententafel gemäß dem Oberbegriff des Anspruchs 1.

Unter "Instrumencentafel" ist im folgenden eine Schalenkonstruktion zu verstehen, die die Sichtseite eines Fahrzeugcockpits vorgibt und in der Regel Bedienungselemente und Anzeigeinstrumente trägt. Fahrzeugcockpits mit entsprechenden Instrumententafeln sind beispielsweise in der DE 34 47 185 A1 und der EP 0 515 287 A1 beschrieben. Bei diesem Stand der Technik bestehen die Instrumententafeln aus einem tragenden, formstabilen Trägerteil, das sichtseitig meist mit einer dekorativen Kunststoff-Folie kaschiert ist. Üblich ist es auch, die Dekorfolie der Kaschierung ganzflächig oder in Teilbereichen mit Polsterschaum zu unterlegen, um eine angenehme Haptik (Griffigkeit) zu erzielen. Die Trägerteile werden dabei aus unterschiedlichen Werkstoffen gefertigt: Hartschaumschalen mit angeschäumter Kaschierung, spritzgegossene Thermoplastschalen und Holzfaserformteile sind üblich.

Seit der Einführung des Airbags hat die Instrumententafel zusätzlich die Aufgabe, den Beifahrerairbag optisch ansprechend abzudecken, ohne dessen Funktion einzuschränken. Zunehmend wird dabei gefordert, daß das Airbagsystem sich nicht auf der Sichtseite der Instrumententafel abzeichnet (sogenannter "unsichtbarer" Airbag). Hierzu werden die Instrumententafeln im Öffnungsbereich des Airbags rückseitig U- oder H-förmig eingekerbt, so daß der expandierende Airbag ein oder zwei Klappen öffnen kann. Dabei dient entweder der Werkstoff des Trägerteils selbst und/oder ein gesondert angebrachtes Bauelement als "plastisches Scharnier". Beispielhaft sei hierzu die gattungsbildende WO 97/03866 genannt. Zum Airbagsystem gehört auch ein Führungsstutzen für den expandierenden Airbag, der sogenannte Schußkanal, der meist ein gesondertes Bauelement ist, das an der Instrumententafel vormontiert angebracht sein kann. Die Fertigung von Instrumententafeln als thermoplastisches Spritzgußteil gestattet es, bei einfacher Fahrzeugausstattung auf das Kaschieren der Instrumententafeln zu verzichten, beispielsweise zugunsten einer Oberflächenstrukturierung (Ledernarbung o.ä.). Bei unkaschierten Instrumententafeln ergeben sich jedoch Schwierigkeiten bei der Befestigung von Zusatzelementen, beispielsweise bei der Vormontage eines Schußkanals für den Airbag. Als Fügeverfahren kommen nur solche in Frage, die sich sichtseitig nicht störend bemerkbar machen (Kleben, Schweißen), wodurch Gestaltungs- und Fertigungsmöglichkeiten eingeschränkt werden. Hierzu kommt, daß sehr unterschiedliche Anforderungen an die Materialeigenschaften der Instrumententafel selbst, des Schußkanals und den Öffnungsbereich für den unsichtbaren Airbag gestellt werden. Die Instrumententafel soll in der Kälte nicht verspröden, jedoch bei höheren Innenraumtemperaturen formstabil bleiben; der Werkstoff darf also nicht zu flexibel sein, an seine Zugfestigkeit werden aber nicht allzu große Anforderungen gestellt. Der Scharnierbereich der Öffnungsklappen des unsichtbaren Airbagsystems sollte dagegen möglichst flexibel sein, um seiner Funktion gerecht zu werden. Der Schußkanal sollte hochfest und steif sein. Die Elastizitätsmoduln, die Bruchdehnung und die Zugfestigkeit der genannten Elemente einer Instrumententafel mit unsichtbarem Airbag sollen also sehr unterschiedlich sein. In der Praxis werden dafür auch unterschiedliche Werkstoffe eingesetzt, mit dem Nachteil, daß das Recycling erschwert und verteuert wird. Weiterhin erschwert die Uneinheitlichkeit der Werkstoffe den Einsatz unkaschierter Instrumententafeln, bei denen das Fügen von Bauteilen durch Nieten oder Schrauben sichtseitig unerwünscht ist, obwohl die Fertigung von thermoplastischen Spritzgußteilen wirtschaftlich vorteilhaft ist und viel gestalterischen Spielraum läßt.

Es stellt sich daher die Erfindungsaufgabe, eine Instrumentafel aus einem thermoplastischen Werkstoff anzugeben, die das Anbringen eines unsichtbaren Airbags auf einfache Weise gestattet und die besser recycelt werden kann.

Diese Aufgabe wird durch die Merkmale des Anspruchs 1 gelöst; die Ansprüche 2 bis 10 geben vorteilhafte Weiterbildungen der erfindungsgemäßen Instrumententafel an.

Durch eine einen Öffnungsbereich in der Instrumententafel für den Airbag vorgebende, den Öffnungsbereich vollständig umrandende rückseitige Querschnittsschwächung der Instrumententafel, eine umlaufende Sollbruchstelle also, die auf der Sichtseite nicht in Erscheinung tritt, wird bei der Betätigung des Airbags dessen Öffnungsbereich komplett als Deckel abgesprengt. Das hat zwei Vorteile:
- Der Werkstoff der Instrumententafel braucht nicht auf Eigenschaften eines plastischen Scharniers abgestimmt zu werden, sondern kann die für die Formstabilität in der Wärme notwendige Steifigkeit besitzen.
- Es entfällt die Gefahr, die bei den üblichen U-und H-förmig geschwächten Instrumententafeln besteht, daß von den Enden der Schwächung unkontrollierte Anrisse der Instrumententafeln ausgehen.

Ein an der Instrumententafel vormontierter Schußkanal erleichtert nicht nur die Gesamtmontage der Instrumententafel, sondern er ermöglicht es auch, den als Deckel absprengbaren Öffnungsbereich der Instrumententafel für den Airbag mit Hilfe eines flächigen Polymerscharniers (eines plastischen Scharniers also) sicher zu befestigen. Die Vormontage des Schußkanals und die Befestigung des Polymerscharniers am "Öffnungsdeckel" der Instrumententafel mit Hilfe einer flächigen Materialverschweißung garantiert eine einwandfreie Sichtseite der Instrumententafel, da in beiden Fällen die Verschweißung auf ihrer Rückseite erfolgt. Die Befestigung des Polymerscharniers am Schußkanal muß nicht notwendigerweise eine ausschließliche Materialverschweißung sein, es kann beispielsweise zweckmäßig sein, Schrauben und/oder Nieten als zusätzliche Sicherung einzusetzen; da der Schußkanal rückseitig angeordnet ist, die Sichtseite also nicht beeinflußt. Um eine sichere Schweißverbindung zu erzielen, bestehen erfindungsgemäß Instrumententafel, Schußkanal und Polymerscharnier aus einem Thermoplast einheitlicher Polymerbasis, aber unterschiedlicher Flexibilisierung. Die einheitliche Polymerbasis garantiert problemlose Verschweißbarkeit aller Bauelemente, die Möglichkeiten unterschiedlicher Flexibilisierung durch Compound-Bildung (chemischer Werkstoffverbund, Co-Polymer) lassen es zu, das Polymrescharnier mit einer Reißdehnung bis zu beispielsweise 300 % zu versehen und somit einen Abriß des "Öffnungsdeckels" sicher zu unterbinden. Eine anpaßte Mineralstoff-Füllung der Thermoplastmatrix kann die geforderte Formstabilität der Instrumententafel in der Wärme bewirken; bei dem Schußkanal, der von den genannten Bauteilen mechanisch am höchsten belastet wird, wenn der Airbag auslöst, sorgt bei geringem Flexibilisierungsgrad des Basispolymers eine Faserverstärkung für die erhöhte Festigkeit. Als Basispolymer eignet sich beispielsweise Polypropylen, das ein günstiges Verhältnis von Preis und Eigenschaftsspektrum aufweist; für die Co-Polymerbildung zur Flexibilisierung bietet der Stand der Technik hinreichende Möglichkeiten, hierzu sei beispielsweise Ethylen/Propylen-Dien (EPDM) genannt. Während für das Polymerscharnier Reißdehnungen bis zu 300 % durch Flexibilisierung erzielbar sind, ist der Flexibilisierungsgrad der eigentlichen Instrumententafel geringer; die Flexibilisierung sollte hier gerade ausreichend sein, einen Splitterbruch bei niedrigen Temperaturen (Wintertemperaturen) zu vermeiden. Dafür kann das Thermoplast der Instrumententafel eine Mineralstoff-Füllung, beispielsweise Talkum, von 15 - 20 Gew.% enthalten, um die Formstabilität in der Wärme zu gewährleisten. Ebenfalls gering flexibilisiert (wie die Instrumententafel) ist der Werkstoff des Schußkanals, dessen Festigkeit durch Einlagerung von Fasern, beispielsweise Glasfasern mit einem Gewichtsanteil von 15 - 30 %, noch erhöht wird. Die Sicherheit des Polymerscharniers kann durch eine Gewebeeinlage erhöht werden, beispielsweise sind kantenfeste verschweißbar ummantelte Polyestergewebe hierfür geeignet.

Für das Verschweißen der Bauteile miteinander sind verschiedene Schweißverfahren anwendbar. Ultraschall-, Reib-, Vibrations- und Laserschweißung seien genannt, wobei die drei erstgenannten Verfahren mit mechanischem Energieeintrag fertigungstechnisch günstig sind. Großflächige Verschweißungen lassen sich optimieren, wenn eine der zu verschweißenden Flächen eine Vielzahl flächig verteilter Schweißstege oder Schweißnoppen besitzt. Vor allem die Verschweißung des Polymerscharniers mit dem absprengbaren Deckel der Instrumententafel kann so optimiert werden. Die umlaufende Querschnittsschwächung der Instrumententafel kann beispielsweise eine rückseitige Kerbe sein. Allerdings besteht dann die Gefahr, daß im Laufe der Zeit die Kerbe sich doch sichtseitig abzeichnet. Günstiger ist es, die Querschnittsschwächung dadurch zu realisieren, daß sie aus einer dichten Folge von Sackbohrungen geringen Durchmessers besteht, die beispielsweise mit Laserstrahlen erzeugt werden können, ein Verfahren, daß in der DE 196 36 429 A1 beschrieben ist und bereits Eingang in die Fertigungstechnik gefunden hat. Es lassen sich so Reißnähte (Querschnittsschwächungen) herstellen, die sich auf der bearbeiteten Fläche (Sichtseite) nicht abzeichnen und die eine definierte Bruchfestigkeit aufweisen.

Die vorliegende Instrumententafel ist vorzugsweise sichtseitig nicht kaschiert. Bei einer derartigen Ausführungsform ist es vorteilhaft, wenn die Sichtseite der Instrumententafel eine Oberflächenstruktur besitzt, beispielsweise eine Ledernarbung. Solche Strukturen lassen sich bei der Fertigung durch Spritzgießen problemlos erzeugen und werten das Formteil optisch erheblich auf. Auch körnige Oberflächen können zur Vergütung angewendet werden. Bei Ledernarbungen ergibt sich der zusätzliche Vorteil, daß gegenüber einer Folienkaschierung kein Musterverzug auftritt.

Die vorliegende Instrumententafel kann jedoch auch kaschiert sein. Das erfordert, soll ein einwandfreies Öffnen der Abdeckung bei der Auslösung des Airbags sichergestellt sein, daß die Kaschierung im Öffnungsbereich eine mit der Querschnittsschwächung der Instrumententafel deckungsgleiche rückseitige Querschnittsschwächung besitzt. Da das Laserperforationsverfahren nach DE 196 36 429 A1 auch für die gemeinsame Perforation einer Mehrschichtanordnung geeignet ist, können sogar schaumhinterlegte Folien zur Kaschierung verwendet werden.

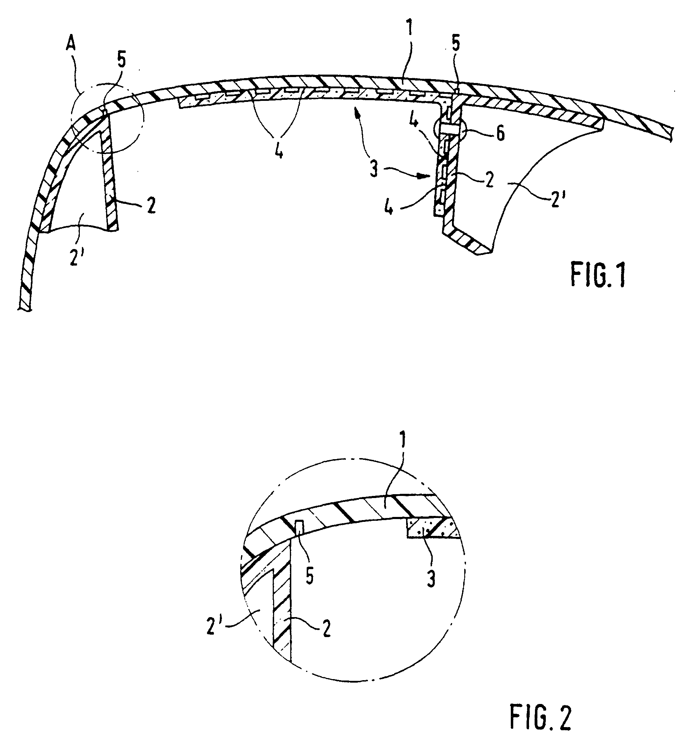

Die Erfindung sei nunmehr anhand des in Fign. 1 und 2 dargestellten Ausführungsbeispiels näher erläutert.
Es zeigen:
- Fig. 1: einen schematischen Querschnitt durch eine Instrumententafel mit vormontiertem Schußkanal und Polymerscharnier, und
- Fig. 2: eine vergrößerte Wiedergabe des Bereichs A in Fig. 1.

In Fig. 1 ist mit 1 die Instrumententafel bezeichnet, mit 2 der Schußkanal. Beide Elemente bestehen aus mit EPDM flexibilisiertem Polypropylen, wobei die Instrumententafel 1 mit 20 Gew.% Talkum gefüllt und der Schußkanal 2 mit beispielsweise 30 % Glaskurzfasern verstärkt sind. Das flächige Polymerscharnier 3 ist - ein Compound von Polypropylen mit Ethylen/Buthylen, ein Werkstoff mit thermoplastischen Eigenschaften. Der Schußkanal 2 ist mit den Versteifungsrippen 2' mechanisch verstärt, um den mechanischen Belastungen des expandierenden Airbags gut gewachsen zu sein. (Die Airbageinheit ist in Fig. 1 nicht mit dargestellt). Das Polymerscharnier 3 besitzt Schweißstege 4, die ein flächiges Verschweißen ermöglichen. Diese Schweißstege 4 reduzieren einerseits die Größe der Schweißfläche auf ein schweißtechnisch beherrschbares Maß (beispielsweise beim Vibrationsschweißen), andererseits ermöglichen sie dabei eine ganzflächige Verbindung des Polymerscharniers mit Instrumententafel und Schußkanal. Eine Nietreihe aus Nieten 6 kann die Verbindungsfläche zwischen dem abgewinkelten Schenkel des Polymerscharniers 3 und dem Schußkanal 2 gegen Schälspannungen sichern. Der Öffnungsbereich der Instrumententafel für den Airbagdurchtritt ist durch die Querschnittsschwächung 5 vorgegeben, die aus einer Reihe von Sacklöchern geringen Durchmessers besteht, die mit Hilfe von Laserstrahlen eingebracht wurden. Häufungsdichte und Tiefe dieser Bohrungen geben dabei eine definierte Reißnaht vor und garantieren ein störungsfreies, definiertes Absprengen des Öffnungsdeckels. In Fig. 2 ist diese Querschnittsschwächung 5 anhand des vergrößert dargestellten Ausschnitts A in Fig. 1 erläutert, bei gleicher Benennung der Bauelemente.

## Patentansprüche

1. Aus thermoplastischem Werkstoff bestehende Instrumententafel (1) für ein Kraftfahrzeug mit nicht sichtbarer Abdeckung eines von dem Innenraum des Kraftfahrzeugs aus betrachtet hinter der Instrumententafel angebrachten Airbagsystems,
**gekennzeichnet durch**
eine einen Öffnungsbereich in der Instrumententafel (1) für den Airbag vorgebende, den Öffnungsbereich vollständig umrandende rückseitige Querschnittsschwächung (5) der Instrumententafel, einen an der Instrumententafel montierten Schußkanal (2) für den Airbag, wobei der Öffnungsbereich in der Instrumententafel für den Airbag **durch** ein Polymerscharnier (3) mit dem Schußkanal (2) verbunden ist und sowohl der Schußkanal (2) an der Instrumententafel (1) als auch das Polymerscharnier (3) zumindest am Öffnungsbereich in der Instrumententafel für den Airbag **durch** eine Materialverschweißung (4) befestigt sind, und wobei Instrumententafel (1), Schußkanal (2) und Polymerscharnier (3) aus einem Thermoplast einheitlicher Polymerbasis, aber unterschiedlicher Flexibilisierung bestehen.

2. Instrumententafel nach Anspruch 1, **dadurch gekennzeichnet, daß** das Basispolymer für Instrumeptentafel (1), Schußkanal (2) und Polymerscharnier (3) Polypropylen (PP) ist.

3. Instrumententafel nach Anspruch 1 oder 2, **dadurch gekennzeichnet, daß** der Werkstoff der Instrumententafel (1) zur Einstellung der Flexibilisierung zusätzlich eine Mineralstoff-Füllung aus 15 - 20 Gew.% Talkum aufweist.

4. Instrumententafel nach einem der Ansprüche 1 bis 3, **dadurch gekennzeichnet, daß** der Werkstoff des Schußkanals (2) des Beifahrerairbags nur gering flexibilisiert ist und eine Mineralfaserverstärkung aus 15 - 30 Gew.% Glasfasern aufweist.

5. Instrumententafel nach einem der Ansprüche 1 bis 4, **dadurch gekennzeichnet, daß** der Werkstoff des Polymerscharniers (3) hoch flexibilisiert ist und eine Reißdehnung von mehr als 200 % aufweist.

6. Instrumententafel nach einem der vorhergehenden Ansprüche, **dadurch gekennzeichnet, daß** das Polymerscharnier (3) eine Gewebeeinlage besitzt.

7. Instrumententafel nach einem der vorhergehenden Ansprüche, **dadurch gekennzeichnet, daß** das Polymerscharnier (3) eine Vielzahl von flächig verteilten Schweißstegen (4) für die Verbindung mit dem Öffnungsbereich und/oder Schußkanal (2) besitzt.

8. Instrumententafel nach einem der vorhergehenden Ansprüche, **dadurch gekennzeichnet, daß** die den Öffnungsbereich des Airbags vorgebende Querschnittsschwächung (5) der Instrumententafel (1) aus einer dichten Folge von Sackbohrungen geringen Durchmessers besteht.

9. Instrumententafel nach einem der vorhergehenden Ansprüche, **dadurch gekennzeichnet, daß** die Instrumententafel (1) unkaschiert ist und auf der Sichtseite eine Oberflächenstruktur besitzt.

10. Instrumententafel nach einem der vorhergehenden Ansprüche, **dadurch gekennzeichnet, daß** die Instrumententafel (1) sichtseitig kaschiert ist und die Kaschierung eine mit der den Öffnungsbereich des Beifahrerairbags vorgebenden Querschnittsschwächung der Instrumententafel deckungsgleiche rückseitige Querschnittsschwächung (5) besitzt.

## Claims

1. Instrument panel (1) for a motor vehicle, made of thermoplastic material, with a non-visible cover of an airbag system which is installed behind the instrument panel as viewed from the interior of the vehicle,
**characterised by**
an area (5) weakened on the rear side through its cross-section which defines an opening area in the instrument panel (1) for the airbag and which completely surrounds the opening area; an ejection channel (2) for the airbag, mounted on the instrument panel, where the opening area in the instrument panel for the airbag is connected to the ejection channel (2) by means of a polymer hinge (3), and where both the ejection channel (2) on the instrument panel (1) and the polymer hinge (3) are secured by a material weld (4) at least in the opening area in the instrument panel for the airbag, and where the instrument panel (1), ejection channel (2) and the polymer hinge (3) consist of a thermoplastic which has a uniform polymer base but different degrees of flexibilisation.

2. Instrument panel as in Claim 1, **characterised by** the fact that the base polymer for the instrument panel (1), ejection channel (2) and polymer hinge (3) is polypropylene (PP).

3. Instrument panel as in Claim 1 or 2, **characterised by** the fact that the material of the instrument panel (1) also has, for the purpose of regulating its flexibilisation properties, a mineral filling of 15-20% by weight of talc.

4. Instrument panel as in one of Claims 1 to 3, **characterised by** the fact that the material of the ejection channel (2) for the passenger airbag has very low flexibilisation, and has a mineral fibre reinforcement consisting of 15-30% by weight of glass fibres.

5. Instrument panel as in one of Claims 1 to 4, **characterised by** the fact that the material of the polymer hinge (3) is highly flexibilised and has a tear elongation of more than 200%.

6. Instrument panel as in one of the preceding Claims, **characterised by** the fact that the polymer hinge (3) has a textile insert.

7. Instrument panel as in one of the preceding Claims, **characterised by** the fact that the polymer hinge (3) has a number of welding studs distributed on its surface to join it to the opening area and/or the ejection channel (2).

8. Instrument panel as in one of the preceding Claims, **characterised by** the fact that the cross-sectional weakened area (5) of the instrument panel (1) which defines the airbag opening area consists of a closely-spaced series of pocket-drilled holes of small diameter.

9. Instrument panel as in one of the preceding Claims, **characterised by** the fact that the instrument panel (1) has no decorative cover, and has a surface structure on its visible side.

10. Instrument panel as in one of the preceding Claims, **characterised by** the fact that the instrument panel (1) has a decorative cover on its visible face, and that the covering material has, on its rear side, a cross-sectional weakened area (5) which is congruent with the cross-sectional weakened area on the instrument panel which defines the opening area for the passenger airbag.

## Revendications

1. Tableau de bord (1) en matière thermoplastique pour véhicule, comportant une couverture non visible d'un système d'airbag disposé, vu depuis l'habitacle du véhicule, derrière le tableau de bord, **caractérisé par** un affaiblissement de la section transversale (5) à l'arrière du tableau de bord définissant la zone d'ouverture pour l'airbag dans le tableau de bord (1) et entourant complètement la zone d'ouverture, par un canal d'éclatement (2) pour l'airbag monté sur le tableau de bord, la zone d'ouverture dans le tableau de bord destinée à l'airbag étant reliée au canal d'éclatement (2) par l'intermédiaire d'une charnière en polyester (3), et aussi bien le canal d'éclatement (2) sur le tableau de bord (1) que la charnière en polymère (3) étant fixés, du moins au niveau de la zone de l'ouverture dans le tableau de bord destinée à l'airbag, par un soudage de matériaux (4), et le tableau de bord (1), le canal d'éclatement (2) et la charnière en polymère (3) étant réalisés à partir d'une matière thermoplastique à base d'un polymère homogène mais de flexibilisation différente.

2. Tableau de bord selon la revendication 1, **caractérisé en ce que** le polymère de base pour le tableau de bord (1), le canal d'éclatement (2) et la charnière en polymère (3) est du polypropylène (PP).

3. Tableau de bord selon la revendication 1 ou 2, **caractérisé en ce que** le matériau du tableau de bord (1) présente en outre une charge en substances minérales de poudre de talc de 15 - 20 % en poids pour la mise au point de la flexibilisation.

4. Tableau de bord selon l'une des revendications 1 à 3, **caractérisé en ce que** le matériau du canal d'éclatement (2) de l'airbag du passager n'est que faiblement flexibilisé et qu'il présente un renforcement en fibres minérales de fibres de verre de 15 - 30 % en poids.

5. Tableau de bord selon l'une des revendications 1 à 4, **caractérisé en ce que** le matériau de la charnière en polymère (3) est hautement flexibilisé et qu'il présente un allongement à la rupture supérieure à 200 %.

6. Tableau de bord selon l'une des revendications précédentes, **caractérisé en ce que** la charnière en polymère (3) possède une couche intermédiaire de tissu.

7. Tableau de bord selon l'une des revendications précédentes, **caractérisé en ce que** la charnière en polymère (3) possède une multitude de points de soudure (4) répartis sur toute la surface pour la liaison avec la zone d'ouverture et/ou le canal d'écoulement (2).

8. Tableau de bord selon l'une des revendications précédentes, **caractérisé en ce que** l'affaiblissement de la section transversale (5) du tableau de bord (1) définissant la zone d'ouverture de l'airbag consiste en une succession rapprochée de trous borgnes d'un faible diamètre.

9. Tableau de bord selon l'une des revendications précédentes, **caractérisé en ce que** le tableau de bord (1) n'est pas doublé et qu'il possède une structure superficielle sur la face apparente.

10. Tableau de bord selon l'une des revendications précédentes, **caractérisé en ce que** le tableau de bord (1) est doublé sur la face apparente et que la doublure possède un affaiblissement de la section transversale (5) arrière coïncidant avec l'affaiblissement de la section transversale du tableau de bord définissant la zone d'ouverture de l'airbag du passager.
